# EUROPÄISCHE PATENTSCHRIFT

(11) **EP 3 742 557 B1**
(45) Veröffentlichungstag und Bekanntmachung des Hinweises auf die Patenterteilung: **21.10.2026**
(21) Anmeldenummer: 20173793.9
(22) Anmeldetag: 11.05.2020
(51) Int. Cl.: H01R 4/48, H01R 12/58, H01R 12/53

(54) **SMD-FÄHIGE THT-AUFNAHME**
SMD-CAPABLE THT RECESS
LOGEMENT À TROUS TRAVERSANTS (THT) MONTÉS EN SURFACE (CMS)

(30) Priorität: 23.05.2019 DE 102019207582
(43) Veröffentlichungstag der Anmeldung: 25.11.2020
(73) Patentinhaber: Siemens Schweiz AG, 8047 Zürich (CH)
(72) Erfinder: Riembauer, Christian, 93051 Regensburg (DE)
(74) Vertreter: Siemens Patent Attorneys

(56) Entgegenhaltungen:
- DE-A1- 102015 226 511
- DE-A1- 19 720 859
- DE-A1- 19 735 409
- DE-U1- 202016 106 235

## Beschreibung

Die Erfindung betrifft eine Anordnung umfassend eine Leiterplatte und eine Vorrichtung, geeignet für eine stoffschlüssige Verbindung mit der Leiterplatte.

Bei der Entwicklung und Herstellung von Flachbaugruppen-Platinen) ist neben dem Preis der zu bestückenden Bauteile auch die zu verwendende Bestück- und Fertigungstechnologie ein Kostenaspekt, denn je mehr Lötvorgänge nötig sind, desto höher sind die Herstellungskosten.

Das deutsche Gebrauchsmuster DE202016106235U1 offenbart einen Leiteranschlusskontakt mit wenigstens einer Lötanschlussfläche zur Anbindung an eine Leiterplatte, und wenigstens einem Steckkontaktanschluss mit einem Federklemmelement, wobei der Steckkontaktanschluss an einer Anschlussfläche des Leiteranschlusskontaktes gebildet ist, die von der Ebene der Lötanschlussfläche beabstandet ist und eine Stecköffnung und mindestens eine federelastische Klemmzunge zur Bildung des Federklemmelementes hat, und wobei die Anschlussfläche in mindestens zwei Fußabschnitte übergeht, die jeweils mit einer Lötanschlussfläche verbunden sind oder eine Lötanschlussfläche an ihrer der Anschlussfläche abgewandten Seite haben.

Die deutsche Patentanmeldung DE102015226511A1 offenbart eine Antriebsvorrichtung, aufweisend: einen Motor, der einen Stator, auf dem eine Wicklungsdrahtgruppe gewickelt ist, einen Rotor, der rotierbar bezüglich des Stators angeordnet ist, und eine Welle beinhaltet, die in einem Körper mit dem Rotor rotiert; eine Steuereinrichtung, die sich auf einem axialen Ende des Motors befindet und ein Substrat aufweist, auf dem elektronische Komponenten zum Steuern einer Energieversorgung der Wicklungsdrahtgruppe implementiert sind; ein Rahmenelement, das dem Substrat zugewandt ist und einen Substratträger aufweist, der das Substrat kontaktierend trägt; einen Vorsprung, der aus dem Rahmenelement hin zum Substrat hervorsteht; und einen Eingriffsteil, der sich fest auf dem Substrat befindet und mehrere elastisch deformierbare Klauen aufweist, die den Vorsprung eingreifend auf bindende Weise halten.

Wenn auf einer Platine SMD-Bauteile (Surface Mounted Device; Oberflächenmontage) und THT-Bauteile (Through Hole Technology; Durchsteckmontage) gemischt verwendet werden, sind zwei Lötvorgänge im Fertigungsprozess, zum Beispiel Reflow- und Wavelöten, nacheinander nötig.

Es ist daher die Aufgabe der vorliegenden Erfindung, eine Vorrichtung bereitzustellen, die es ermöglicht, Bauteile unterschiedlicher Bestückungstechnologien mit nur einem Lötvorgang auf einer Platine zu bestücken.

Die Aufgabe wird gelöst durch eine Anordnung umfassend eine Leiterplatte und eine Vorrichtung, geeignet für eine stoffschlüssige Verbindung mit der Leiterplatte, die einen Via umfasst, wobei die Vorrichtung eine Öffnung zur Aufnahme eines Kontaktteils aufweist, wobei die Öffnung durch Blattfederelemente begrenzt ist, und im Wesentlichen mittig über das Via aufgebracht ist, wobei bei der Aufnahme des Kontaktteils mittels Through-Hole-Technologie durch die Öffnung hindurch eine kraftschlüssige Verbindung des Kontaktteils mit den Blattfederelementen und eine elektrische Kontaktierung des Kontaktteils mit der Vorrichtung herstellbar ist, wobei es sich bei der Vorrichtung um ein entsprechend ausgestaltetes Metallplättchen handelt. Die Vorrichtung ermöglicht es u.a., bedrahtete Bauteile wie Widerstände, Elektrolytkondensatoren, auf eine Platine zu platzieren, ohne dass ein erneuter Lötvorgang (z.B. Schwalllöten) verwendet werden muss. Die Vorrichtung fixiert zum einen das Bauteil mechanisch, stellt aber mit Vorteil auch den elektrischen Kontakt her. Es lässt sich somit ein Lötvorgang einsparen.

Die Vorrichtung selbst wird mit Vorteil über SMD-Lötverfahren auf den Schaltungsträger, das PCB (printed circuit board; Leiterplatte, Leiterkarte, Platine oder gedruckte Schaltung), aufgebracht.

Eine erste vorteilhafte Ausgestaltung der Erfindung liegt darin, dass die Vorrichtung im Wesentlichen mittig die Öffnung zur Aufnahme des Kontaktteils (Pin) aufweist. Dadurch weist die Vorrichtung trotz der Öffnung eine hohe Stabilität auf.

Eine weitere vorteilhafte Ausgestaltung der Erfindung liegt darin, dass die Öffnung durch zwei zueinander gegenüberliegende Blattfederelemente begrenzt ist. Durch die Federwirkung der Blattfederelemente lässt sich leicht eine kraftschlüssige Verbindung und Kontaktierung herstellen.

Eine weitere vorteilhafte Ausgestaltung der Erfindung liegt darin, dass es sich bei der Vorrichtung um ein entsprechend eingerichtetes Metallplättchen handelt. Ein Metallplättchen lässt sich fest mit der Leiterplatte verbinden.

Eine weitere vorteilhafte Ausgestaltung der Erfindung liegt darin, dass es sich bei dem Metallplättchen um ein entsprechend gestanztes oder geformtes Metallplättchen handelt. Die Vorrichtung selbst kann somit günstig hergestellt werden, z.B. als gestanztes, mit Vorteil verzinntes Kupferblech.

Eine weitere vorteilhafte Ausgestaltung der Erfindung liegt darin, dass das Metallplättchen eine Kupferlegierung aufweist. Durch die Kupferlegierung werden eine hohe Festigkeit, Verformbarkeit, Kaltverfestigung, Korrosionsbeständigkeit und gute Gleiteigenschaften für die Vorrichtung sichergestellt.

Eine weitere vorteilhafte Ausgestaltung der Erfindung liegt darin, dass durch die kraftschlüssige Verbindung das Kontaktteil auf der Leiterplatte fixiert wird. Durch die kraftschlüssige Verbindung werden somit gleichzeitig die mechanische Fixierung und die elektrische Kontaktierung des zu bestückenden Bauteils auf der Leiterplatte sichergestellt. Eine separate Kontaktierung (z.B. durch Verdrahtung) ist nicht nötig.

Eine weitere vorteilhafte Ausgestaltung der Erfindung liegt darin, dass die stoffschlüssige Verbindung zwischen der Vorrichtung und der Leiterplatte durch eine Lötverbindung erfolgt. Mit Vorteil über geeignete SMD-Lötverfahren, wie z.B. Reflow-Löten, Wiederaufschmelzlöten (reflow soldering) oder entsprechende Weichlötverfahren.

Eine weitere vorteilhafte Ausgestaltung der Erfindung liegt darin, dass die Vorrichtung auf der Rückseite der Leiterplatte durch die stoffschlüssige Verbindung auf der Leiterplatte aufgebracht ist. Dadurch stört die Vorrichtung die Architektur bzw. Die Topologie der Leiterplatte nicht.

Eine weitere vorteilhafte Ausgestaltung der Erfindung liegt in einer Leiterplatte, geeignet für eine stoffschlüssige Verbindung mit zumindest einer erfindungsgemässen Vorrichtung. Die Vorrichtung kann für beliebige Leiterplatten verwendet werden. Die Leiterplatte kann z.B. aus faserverstärktem Kunststoff (z.B. Faser-Kunststoff-Verbund (FKV)) oder aus einem Glasfaser-Epoxidharz-Verbund bestehen, z.B. FR4.

Eine weitere vorteilhafte Ausgestaltung der Erfindung liegt darin, dass die Leiterplatte für die stoffschlüssige Verbindung mit der Vorrichtung je zwei benachbart zueinander angeordnete Footprint-Pads aufweist. Mit Vorteil sind die benachbart zueinander angeordneten Footprint-Pads so beabstandet, dass eine entsprechende Bohrung oder Via zwischen den Footprint-Pads angebracht werden kann. Z.B. für die Aufnahme eines Pins (wire) für die Aufnahme und Kontaktierung eines Bauteils.

Die Erfindung sowie vorteilhafte Ausführungen der vorliegenden Erfindung werden am Beispiel der nachfolgenden Figur erläutert. Dabei zeigt:
- FIG 1: eine erste beispielhafte Vorrichtung, geeignet für eine stoffschlüssige Verbindung mit einer Leiterplatte,
- FIG 2: eine zweite beispielhafte Vorrichtung, geeignet für eine stoffschlüssige Verbindung mit einer Leiterplatte,
- FIG 3: dritte beispielhafte Vorrichtungen, geeignet für eine stoffschlüssige Verbindung mit einer Leiterplatte,
- FIG 4: eine vierte beispielhafte Vorrichtung mit beispielhaften Bemassungen in mm, und
- FIG 5: beispielhafte Vorgaben für das Layout von Footprint-Pads in Abhängigkeit eines standardisierten SMD-Bauteils.

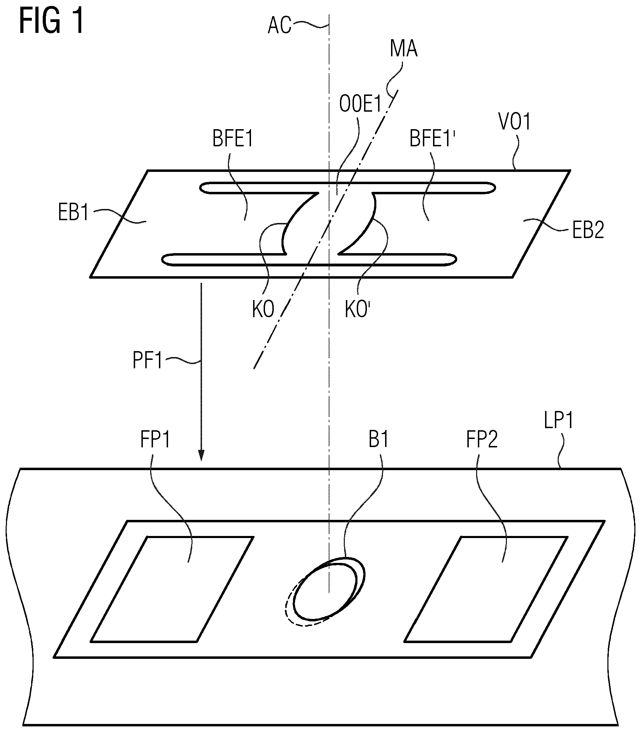

Figur 1 zeigt eine erste beispielhafte Vorrichtung VO1, geeignet für eine stoffschlüssige Verbindung mit einer Leiterplatte LP1. Die Vorrichtung VO1 ist geeignet für eine stoffschlüssige Verbindung mit einer Leiterplatte LP1, wobei die Vorrichtung VO1 eine Öffnung OE1 zur Aufnahme eines Kontaktteils (Pin) aufweist, wobei die Öffnung OE1 durch Blattfederelemente BFE1, BFE1' begrenzt ist, wobei bei der Aufnahme des Kontaktteils durch die Öffnung OE1 hindurch eine kraftschlüssige Verbindung des Kontaktteils mit den Blattfederelementen BFE1, BFE1' und gleichzeitig eine elektrische Kontaktierung des Kontaktteils mit der Vorrichtung VO1 herstellbar ist bzw. hergestellt wird.

Die Darstellung gemäss Figur 1 zeigt die Rückseite einer Flachbaugruppe. Beim Material der Vorrichtung VO1 kann es sich z.B. um ein gestanztes (mit Vorteil verzinntes) Kupferplättchen als Metallplättchen handeln. Der Pfeil PF1 zeigt an, dass die Vorrichtung VO1 auf die Leiterplatte LP1 aufgebracht wird. Die Vorrichtung VO1 kann z.B. durch eine geeignete Kleb- oder Lötverbindung auf Footprint-Pads FP1, FP2 aufgebracht und auf der Leiterplatte LP1 befestigt werden. Es können dazu Standard-Footprints, z.B. 1210 mit Lötpaste bzw. benetzte Lötpads verwendet werden. Die Leiterplatte LP1 kann z.B. aus dem Verbundwerkstoff der Klasse FR4 bestehen. Die Footprint-Pads FP1, FP2 werden auch als Landing-Pads bezeichnet und stellen auf der Leiterplatte LP1 SMD-Kontaktierflächen für die Vorrichtung VO1 dar. Mit Vorteil sind die Footprint-Pads FP1, FP2 so auf der Leiterplatte LP1 angeordnet, dass die Endbereiche EB1, EB2 der Vorrichtung VO1 nach Anbringung bzw. Aufbringung der Vorrichtung VO1 auf der Leiterplatte LP1 auf den Footprint-Pads FP1, FP2 positioniert sind. Mit Vorteil sind die Footprint-Pads FP1, FP2 mit den Bauelementen bzw. Bauteilen auf der Leiterplatte LP1 elektrisch kontaktiert. Mit Vorteil weisen die Footprint-Pads FP1, FP2 jeweils einer Vorrichtung VO1 das gleiche elektrische Potential auf. Mit Vorteil sind die Footprint-Pads FP1, FP2 sowie die dazwischenliegende Bohrung B1 (bzw. Via) miteinander fluchtend auf der Leiterplatte LP1 angebracht bzw. positioniert. Mit Vorteil liegen die Footprint-Pads FP1, FP2 sowie die dazwischenliegende Bohrung B1 oder das Via beanstandet auf einer Achse. Mit Vorteil entstehen bei der Herstellung der Leiterplatte LP1 die jeweiligen Footprint-Pads FP1, FP2 auf der Leiterplatte LP1 durch entsprechende Maskierung bzw. Maskierungsschritte (z.B. nach einem entsprechenden Kupfer-Ätzverfahren). Die jeweiligen Endbereiche EB1, EB2 der Vorrichtung VO1 sind durch geeignete Verbindungsmittel auf den jeweiligen Footprint-Pads FP1, FP2 befestigt (z.B. z.B. durch eine geeignete Löt- oder Klebeverbindung). Mit Vorteil ist die Vorrichtung VO1 auf der Rückseite der Leiterplatte LP1 angebracht, die der Bestückungsseite gegenüberliegt.

Alternativ kann die Vorrichtung VO1 auch auf der Bestückungsseite der Leiterplatte LP1 angeordnet sein. In diesem Fall ragen die Blattfederelemente der Vorrichtung VO1 nach dem Hindurühren des Pins in eine entsprechende Vertiefung (z.B. Sackloch) der Leiterplatte LP1.

Mit Vorteil wird die Öffnung OE1 der Vorrichtung VO1 im Wesentlichen mittig über der Bohrung oder das Via B1 aufgebracht. Die Öffnung OE1 muss sich aber nicht unbedingt mittig in der Vorrichtung VO1 befinden. Die Bohrung oder das Via B1 befindet sich auf der Leiterplatte LP1 und dient zur Aufnahme des Kontaktteils (z.B. Pin) eines Bauteils, z.B. in THT-Technologie (Through-Hole-Technologie). Ein Via bzw. eine Durchkontaktierung oder ein Durchsteiger ist eine vertikale elektrische Verbindung zwischen den Leiterbahnebenen einer Leiterplatte. Die Verbindung wird z.B. durch eine innen metallisierte Bohrung im Trägermaterial der Leiterplatte realisiert. Mit Vorteil weist die Bohrung oder das Via B1 nur einen geringen Restring hinsichtlich des Durchmessers des durchzusteckenden Kontaktteils (z.B. Pin) auf.

Gemäss Darstellung in Figur 1 stellt die gestrichelte Linie eine zur Vorrichtung VO1 senkrechte bzw. im Wesentlichen senkrechte Achse AC z.B. eine Ein- oder Durchführachse für die einzuführenden bzw. hindurch zu führenden Kontaktteile (Pins) oder Vias dar. Mit Vorteil weisen die Blattfederelemente BFE1, BFE1' jeweils eine einander gegenüberliegende Kontur KO bzw. KO' auf. Mit Vorteil sind die einander gegenüberliegenden Konturen KO bzw. KO' symmetrisch zu einer (fiktiven) Mittelachse MA. Mit Vorteil sind die Blattfederelemente BFE1, BFE1' jeweils federelastisch. Die Vorrichtung VO1 ermöglicht es, dass ein Kontaktteil (Pin) oder ein Via auf einer Leiterplatte LP1 in Klemmtechnik bzw. in Klemmschneidtechnik befestigt wird bzw. verbindbar ist.

Eine vorteilhafte Ausgestaltung der Erfindung liegt darin, dass die Vorrichtung VO1 im Wesentlichen mittig die Öffnung OE1 zur Aufnahme des Kontaktteils (Pin) aufweist.

Eine vorteilhafte Ausgestaltung der Erfindung liegt darin, dass die Öffnung OE1 durch zwei zueinander gegenüberliegende Blattfederelemente BFE1, BFE1'begrenzt ist.

Eine vorteilhafte Ausgestaltung der Erfindung liegt darin, dass es sich bei der Vorrichtung VO1 um ein entsprechend eingerichtetes Metallplättchen handelt.

Eine vorteilhafte Ausgestaltung der Erfindung liegt darin, dass es sich bei dem Metallplättchen um ein entsprechend gestanztes oder geformtes Metallplättchen handelt.

Eine vorteilhafte Ausgestaltung der Erfindung liegt darin, dass das Metallplättchen eine Kupferlegierung aufweist.

Eine vorteilhafte Ausgestaltung der Erfindung liegt darin, dass durch die kraftschlüssige Verbindung das Kontaktteil auf der Leiterplatte LP1 fixiert wird bzw. fixiert ist.

Eine vorteilhafte Ausgestaltung der Erfindung liegt darin, dass die stoffschlüssige Verbindung zwischen der Vorrichtung VO1 und der Leiterplatte LP1 durch eine Lötverbindung erfolgt.

Eine vorteilhafte Ausgestaltung der Erfindung liegt darin, dass die Vorrichtung VO1 auf der Rückseite der Leiterplatte LP1 durch die stoffschlüssige Verbindung auf der Leiterplatte LP1 aufgebracht ist.

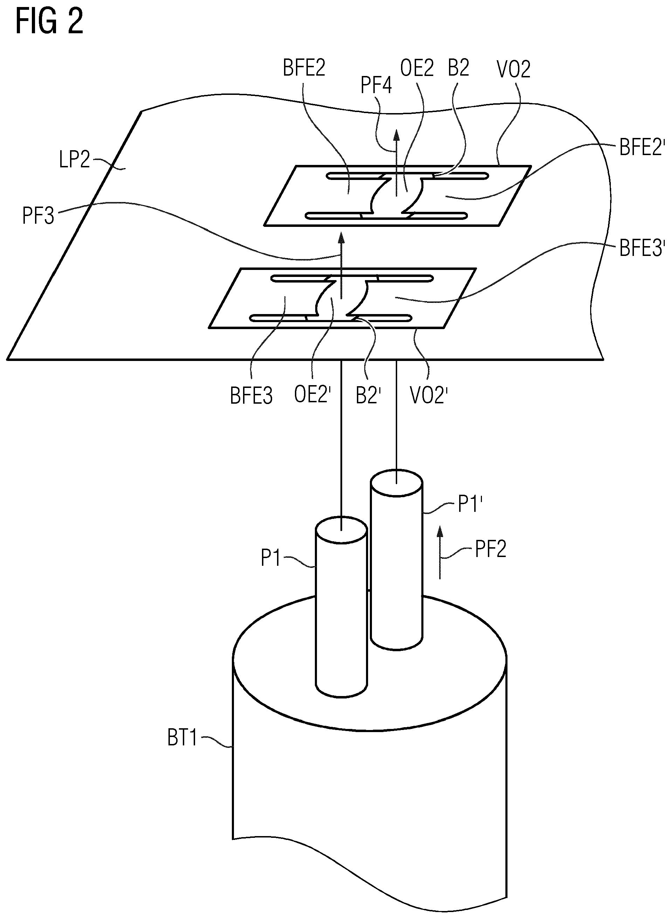

Figur 2 zeigt zweite beispielhafte Vorrichtungen VO2, VO2', geeignet für eine stoffschlüssige Verbindung mit einer Leiterplatte LP2. Die Vorrichtungen VO2, VO2' sind jeweils geeignet für eine jeweilige stoffschlüssige Verbindung mit einer Leiterplatte LP2, wobei die Vorrichtungen VO2, VO2' jeweils eine Öffnung OE2, OE2' zur Aufnahme eines Kontaktteils (Pin) P1, P2 eines Bauteils BT1 (z.B. Kondensator, Elko-Körper) aufweisen, wobei die jeweiligen Öffnungen OE2, OE2' jeweils durch Blattfederelemente BFE2, BFE2' bzw. BFE3, BFE3' begrenzt sind, wobei bei der Aufnahme eines Kontaktteils P1, P1' in die jeweilige Öffnung OE2, OE2' eine kraftschlüssige Verbindung des jeweiligen Kontaktteils P1, P1' mit den jeweiligen Blattfederelementen BFE2, BFE2' bzw. BFE3, BFE3' und eine elektrische Kontaktierung des Kontaktteils P1, P1' mit der Vorrichtung VO2 bzw. VO2' herstellbar ist. Die Pfeile PF2 - PF4 stellen die Einsteckrichtung bzw. Durchsteckrichtung der Kontaktteile P1, P1' des Bauelements bzw. des Bauteils BT1 dar.

Mit Vorteil sind die Öffnungen OE2, OE2' jeweils im Wesentlichen mittig über den jeweiligen Bohrungen B2, B2' bzw. Via angeordnet.

Mit Vorteil sind die Öffnungen OE2, OE2' jeweils durch zwei zueinander gegenüberliegende Blattfederelemente BFE2, BFE2' bzw. BFE3, BFE3' begrenzt.

Die Darstellung gemäss Figur 2 zeigt die Rückseite einer Flachbaugruppe.

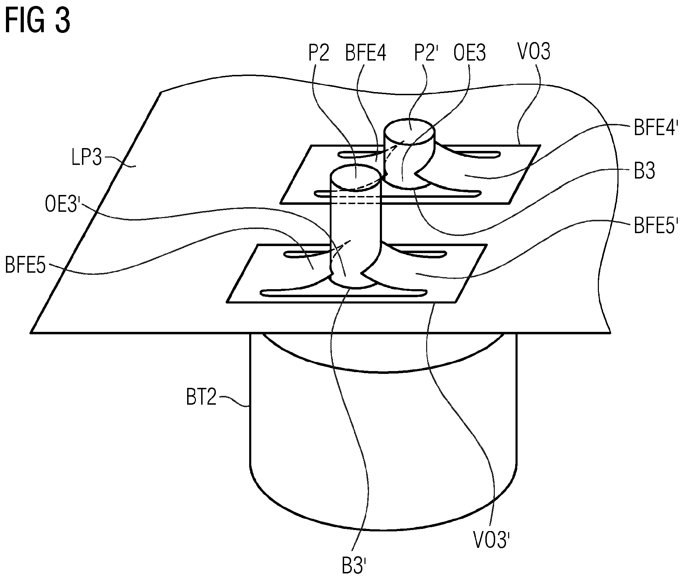

Figur 3 zeigt dritte beispielhafte Vorrichtungen VO3, VO3', geeignet für eine jeweilige stoffschlüssige Verbindung mit einer Leiterplatte LP3. Die Vorrichtungen VO3, VO3' sind jeweils geeignet für eine jeweilige stoffschlüssige Verbindung mit einer Leiterplatte LP3, wobei die Vorrichtungen VO3, VO3' jeweils eine Öffnung OE3, OE3' zur Aufnahme eines Kontaktteils (Pin) P2, P2' eines Bauteils BT2 (z.B. Kondensator, Elko-Körper) aufweisen, wobei die jeweiligen Öffnungen OE3, OE3' jeweils durch Blattfederelemente BFE4, BFE4' bzw. BFE5, BFE5' begrenzt sind, wobei bei der Aufnahme eines Kontaktteils P2, P2' in die jeweilige Öffnung OE3, OE3' eine kraftschlüssige Verbindung des jeweiligen Kontaktteils P2, P2' mit den jeweiligen Blattfederelementen BFE4, BFE4' bzw. BFE5, BFE5' und eine elektrische Kontaktierung des Kontaktteils P2, P2' mit der Vorrichtung VO3 bzw. VO3' herstellbar ist.

Mit Vorteil sind die Öffnungen OE3, OE3' jeweils im Wesentlichen mittig über den jeweiligen Bohrungen B3, B3' bzw. Via angeordnet.

Mit Vorteil sind die Öffnungen OE3, OE3' jeweils durch zwei zueinander gegenüberliegende Blattfederelemente BFE4, BFE4' bzw. BFE5, BFE5' begrenzt.

Die Darstellung gemäss Figur 3 zeigt die Rückseite einer Flachbaugruppe, wobei durch die Kontaktteile P2, P2' des Bauteils BT2 eine Kontaktierung durch die Blattfederelemente BFE4, BFE4' bzw. BFE5, BFE5' mit der Leiterplatte LP3 erfolgt ist.

Nach erfolgter THT-Aufnahme des Bauteils BT2 auf der Leiterplatte LP3 kann ein SMD-Lötverfahren verwendet werden.

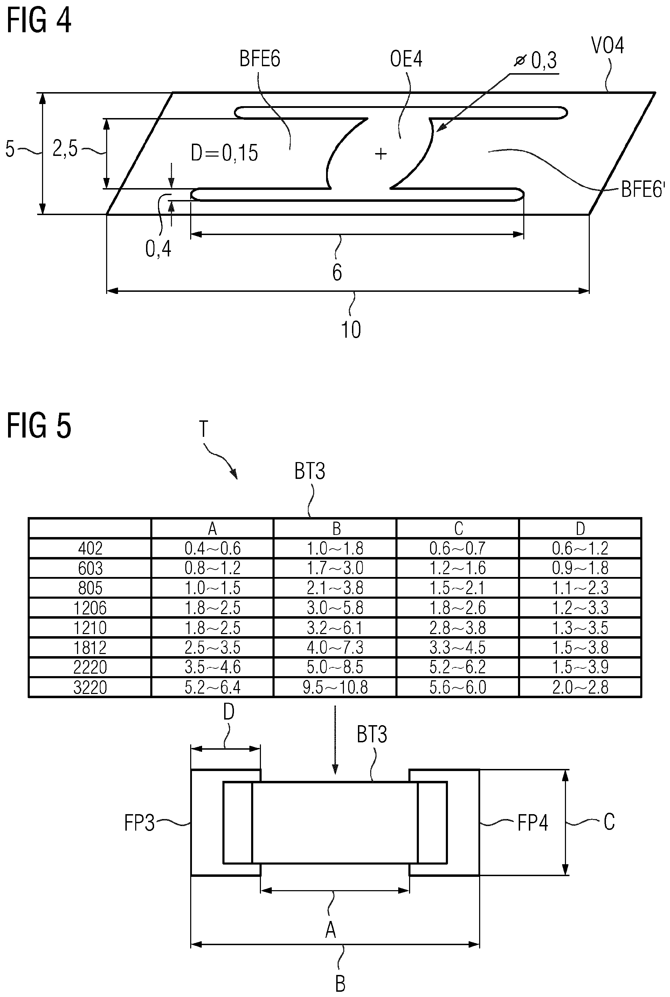

Figur 4 zeigt eine vierte beispielhafte Vorrichtung VO4 mit beispielhaften Bemassungen (Abmessungen) in mm. Die vierte beispielhafte Vorrichtung VO4 weist Blattfederelemente BFE6, BFE6' und eine Öffnung OE4 auf.

Figur 5 zeigt im linken Teil der Figur eine Tabelle T mit beispielhaften Vorgaben für Abmessungen A, B, C, D für das Layout von Footprint-Pads FP3, FP4 in Abhängigkeit eines standardisierten beispielhaften SMD-Bauteils BT3. Die Abmessung A stellt den jeweiligen Abstand zwischen den Footprint-Pads FP3 und FP4 auf der Leiterplatte dar. Die linke Spalte in der Tabelle T führt die entsprechenden beispielhaften standardisierten Bauteile BT3 auf. Die Spalten A, B, C, D die jeweiligen empfohlenen beispielhaften Abmessungen zum jeweiligen Bauteil BT3. Die Tabelle T stellt für jeweilige Bauteile BT3 empfohlene beispielhafte Footprint-Layout Abmessungen dar. Die beispielhaften Abmessungen A, B, C, D sind jeweils in der Einheit (Unit) mm angegeben.

Die erfindungsgemässe Vorrichtung kann durch SMD-typische Lötverfahren auf der Leiterplatte aufgebracht werden. Durch die erfindungsgemässe Vorrichtung können THT-Bauteile elektrisch kontaktiert und mechanisch fixiert werden.

Es wird dabei nur der SMD-Lötprozess verwendet, die THT-Bauteile werden danach montiert. Es fällt dadurch der Schwall/Lötprozess weg (=Kostenersparnis aus verwendeter Fertigungsmittel), und die Flachbaugruppe hat eine geringere Durchflusszeit im Produktionsschritt (d.h. Kostenersparnis auch bzgl. der Zeit).

Die erfindungsgemässe Vorrichtung ermöglicht es, bedrahtete Bauteile wie Widerstände, Elektrolytkondensatoren, auf Platinen (Leiterplatten) zu platzieren, ohne dass ein erneuter Lötvorgang (z.B. Schwalllöten) verwendet werden muss. Das Konstrukt fixiert zum einen das Bauteil mechanisch, stellt aber auch den elektrischen Kontakt her. Es lasst sich somit ein Lötvorgang einsparen.

Die erfindungsgemässe Vorrichtung selbst wird mit Vorteil über SMD Lötverfahren auf den Träger (Leiterplatte), das PCB, aufgebracht.

Die erfindungsgemässe Vorrichtung selbst kann günstig hergestellt werden, z.B. als gestanztes, verzinntes Kupferblech. Dessen Kosten sind dabei geringer als
- Ein THT-Lötvorgang
- Eine SMD-lötfähige TH-Version des Bauteils ("THR", Through-Hole-Reflow).

Vorrichtung, geeignet für eine stoffschlüssige Verbindung mit einer Leiterplatte, wobei die Vorrichtung eine Öffnung zur Aufnahme eines Kontaktteils (Pin) aufweist, wobei die Öffnung durch Blattfederelementen begrenzt ist, wobei bei der Aufnahme des Kontaktteils in die Öffnung eine kraftschlüssige Verbindung des Kontaktteils mit den Blattfederelementen und eine elektrische Kontaktierung des Kontaktteils mit der Vorrichtung herstellbar ist.

### Bezugszeichen

VO1,VO2,VO2',VO3,VO3',VO4 Vorrichtung
OE1,OE2,OE2',OE3,OE3',OE4 Öffnung
BFE1,BFE1',BFE2,BFE2',BFE3, BFE3',BFE4,BFE4',BFE5,BFE5', BFE6,BFE6' Blattfederelement
FP1 - FP4 Footprint
LP1 - LP3Schaltungsträger, Leiterplatte
B1, B2, B2', B3, B3' Bohrung
P1, P1', P2, P2' Pin
BT1, BT2, BT3 Bauteil
PF1 Pfeil
FR4 Verbundwerkstoff
AC Achse
MA Mittelachse
KO, KO' Kontur
EB1, EB2 Endbereiche
T Tabelle
A, B, C, D Abmessungen

## Patentansprüche

1. Anordnung umfassend eine Leiterplatte und eine Vorrichtung (VO1, VO2, VO2', VO3, VO3', VO4), geeignet für eine stoffschlüssige Verbindung mit der Leiterplatte (LP1 - LP3), die einen Via umfasst, wobei die Vorrichtung (VO1, VO2, VO2', VO3, VO3', VO4) eine Öffnung (OE1, OE2, OE2', OE3, OE3', OE4) zur Aufnahme eines Kontaktteils (P1, P1', P2, P2') aufweist, wobei die Öffnung (OE1, OE2, OE2', OE3, OE3', OE4) durch Blattfederelemente (BFE1,BFE1', BFE2, BFE2', BFE3, BFE3', BFE4, BFE4',BFE5, BFE5', BFE6, BFE6') begrenzt ist, und im Wesentlichen mittig über das Via aufgebracht ist, wobei bei der Aufnahme des Kontaktteils mittels Through-Hole-Technologie durch die Öffnung (OE1, OE2, OE2', OE3, OE3', OE4) hindurch eine kraftschlüssige Verbindung des Kontaktteils mit den Blattfederelementen (BFE1,BFE1', BFE2, BFE2', BFE3, BFE3', BFE4, BFE4', BFE5, BFE5', BFE6, BFE6') und eine elektrische Kontaktierung des Kontaktteils mit der Vorrichtung (VO1, VO2, VO2', VO3, VO3', VO4) herstellbar ist, wobei es sich bei der Vorrichtung um ein entsprechend ausgestaltetes Metallplättchen handelt.

2. Anordnung nach Anspruch 1, wobei die Vorrichtung (VO1, VO2, VO2', VO3, VO3', VO4) im Wesentlichen mittig die Öffnung (OE1, OE2, OE2', OE3, OE3', OE4) zur Aufnahme des Kontaktteils (P1, P1', P2, P2') aufweist.

3. Anordnung nach_einem der vorstehenden Ansprüche, wobei die Öffnung (OE1, OE2, OE2', OE3, OE3', OE4) der Vorrichtung (VO1, VO2, VO2', VO3, VO3', VO4) durch zwei zueinander gegenüberliegende Blattfederelemente (BFE1, BFE1', BFE2, BFE2', BFE3, BFE3', BFE4, BFE4', BFE5, BFE5', BFE6, BFE6') begrenzt ist.

4. Anordnung nach einem der vorstehenden Ansprüche, wobei es sich bei dem Metallplättchen um ein entsprechend gestanztes oder geformtes Metallplättchen handelt.

5. Anordnung nach einem der vorstehenden Ansprüche, wobei das Metallplättchen eine Kupferlegierung aufweist.

6. Anordnung nach einem der vorstehenden Ansprüche, wobei die Vorrichtung (VO1, VO2, VO2', VO3, VO3') eingerichtet ist, durch die kraftschlüssige Verbindung das Kontaktteil (P1, P1', P2, P2') auf der Leiterplatte (LP1 - LP3) zu fixieren.

7. Anordnung nach einem der vorstehenden Ansprüche, wobei die stoffschlüssige Verbindung zwischen der Vorrichtung (VO1, VO2, VO2', VO3, VO3') und der Leiterplatte (LP1 - LP3) durch eine Lötverbindung erfolgt.

8. Anordnung nach einem der vorstehenden Ansprüche, wobei die Vorrichtung (VO1, VO2, VO2', VO3, VO3',VO4) auf der Rückseite der Leiterplatte (LP1 - LP3) durch die stoffschlüssige Verbindung auf der Leiterplatte (LP1 - LP3) aufgebracht ist.

9. Anordnung nach einem der vorstehenden Ansprüche, wobei die Vorrichtung (VO1, VO2, VO2', VO3, VO3',VO4) zwei Endbereiche (EB1, EB2) für Footprint-Pads (FP1, FP2) aufweist.

## Claims

1. Arrangement comprising a circuit board and an apparatus (VO1, VO2, VO2', VO3, VO3', VO4), suitable for an integral connection to the circuit board (LP1 - LP3), which comprises a via, wherein the apparatus (VO1, VO2, VO2', VO3, VO3', VO4) has an opening (OE1, OE2, OE2', OE3, OE3', OE4) for receiving a contact part (P1, P1', P2, P2'), wherein the opening (OE1, OE2, OE2', OE3, OE3', OE4) is delimited by leaf spring elements (BFE1,BFE1', BFE2, BFE2', BFE3, BFE3', BFE4, BFE4',BFE5, BFE5', BFE6, BFE6'), and is attached substantially centrally over the via, wherein, when receiving the contact part through the opening (OE1, OE2, OE2', OE3, OE3', OE4) using through-hole technology, it is possible to produce a force-fit connection between the contact part and the leaf spring elements (BFE1,BFE1', BFE2, BFE2', BFE3, BFE3', BFE4, BFE4', BFE5, BFE5', BFE6, BFE6') and an electrical contacting between the contact part and the apparatus (VO1, VO2, VO2', VO3, VO3', VO4), wherein the apparatus constitutes a small metal plate that is configured accordingly.

2. Arrangement according to claim 1, wherein the apparatus (VO1, VO2, VO2', VO3, VO3', VO4) has the opening (OE1, OE2, OE2', OE3, OE3', OE4) for receiving the contact part (P1, P1', P2, P2') substantially centrally.

3. Arrangement according to one of the preceding claims, wherein the opening (OE1, OE2, OE2', OE3, OE3', OE4) of the apparatus (VO1, VO2, VO2', VO3, VO3', VO4) is delimited by two mutually opposing leaf spring elements (BFE1, BFE1', BFE2, BFE2', BFE3, BFE3', BFE4, BFE4', BFE5, BFE5', BFE6, BFE6').

4. Arrangement according to one of the preceding claims, wherein the small metal plate constitutes a small metal plate that has been punched or shaped accordingly.

5. Arrangement according to one of the preceding claims, wherein the small metal plate features a copper alloy.

6. Arrangement according to one of the preceding claims, wherein the apparatus (VO1, VO2, VO2', VO3, VO3') is configured to fix the contact part (P1, P1', P2, P2') to the circuit board (LP1 - LP3) by means of the force-fit connection.

7. Arrangement according to one of the preceding claims, wherein the integral connection between the apparatus (VO1, VO2, VO2', VO3, VO3') and the circuit board (LP1 - LP3) takes place by means of a solder connection.

8. Arrangement according to one of the preceding claims, wherein the apparatus (VO1, VO2, VO2', VO3, VO3',VO4) is attached to the rear side of the circuit board (LP1 - LP3) by means of the integral connection on the circuit board (LP1 - LP3).

9. Arrangement according to one of the preceding claims, wherein the apparatus (VO1, VO2, VO2', VO3, VO3',VO4) has two end regions (EB1, EB2) for footprint pads (FP1, FP2).

## Revendications

1. Agencement comprenant une carte de circuit imprimé et un dispositif (VO1, VO2, VO2`, VO3, VO3`, VO4), approprié pour une liaison par complémentarité de matière avec la carte de circuit imprimé (LP1 à LP3), qui comprend un via, dans lequel le dispositif (VO1, VO2, VO2`, VO3, VO3`, VO4) présente un orifice (OE1, OE2, OE2', OE3, OE3`, OE4) permettant d'accueillir une pièce de contact (P1, P1`, P2, P2`), dans lequel l'orifice (OE1, OE2, OE2`, OE3, OE3`, OE4) est délimité par des éléments formant ressort à lame (BFE1, BFE1`, BFE2, BFE2`, BFE3, BFE3`, BFE4, BFE4`, BFE5, BFE5`, BFE6, BFE6`) et est mis en place de manière essentiellement centrale au-dessus du via, dans lequel une liaison par complémentarité de force de la pièce de contact avec les éléments formant ressort à lame (BFE1, BFE1`, BFE2, BFE2`, BFE3, BFE3`, BFE4, BFE4`, BFE5, BFE5`, BFE6, BFE6`) et une mise en contact électrique de la pièce de contact avec le dispositif (VO1, VO2, VO2`, VO3, VO3`, VO4) peuvent être créées à travers l'orifice (OE1, OE2, OE2`, OE3, OE3`, OE4) au moyen de la technologie Through-Hole lors de l'accueil de la pièce de contact, dans lequel le dispositif est une plaquette métallique conçue en conséquence.

2. Agencement selon la revendication 1, dans lequel le dispositif (VO1, VO2, VO2`, VO3, VO3`, VO4) présente de manière essentiellement centrale l'orifice (OE1, OE2, OE2`, OE3, OE3`, OE4) permettant d'accueillir la pièce de contact (P1, P1`, P2, P2`).

3. Agencement selon l'une quelconque des revendications précédentes, dans lequel l'orifice (OE1, OE2, OE2`, OE3, OE3`, OE4) du dispositif (VO1, VO2, VO2`, VO3, VO3`, VO4) est délimité par deux éléments formant ressort à lame (BFE1, BFE1`, BFE2, BFE2`, BFE3, BFE3`, BFE4, BFE4`, BFE5, BFE5`, BFE6, BFE6`) opposés.

4. Agencement selon l'une quelconque des revendications précédentes, dans lequel la plaquette métallique est une plaquette métallique découpée ou moulée en conséquence.

5. Agencement selon l'une quelconque des revendications précédentes, dans lequel la plaquette métallique est en alliage de cuivre.

6. Agencement selon l'une quelconque des revendications précédentes, dans lequel le dispositif (VO1, VO2, VO2`, VO3, VO3`) est conçu pour immobiliser la pièce de contact (P1, P1`, P2, P2`) sur la carte de circuit imprimé (LP1 à LP3) grâce à la liaison par complémentarité de force.

7. Agencement selon l'une quelconque des revendications précédentes, dans lequel la liaison par complémentarité de matière entre le dispositif (VO1, VO2, VO2`, VO3, VO3`) et la carte de circuit imprimé (LP1 à LP3) est réalisée grâce à une liaison par soudage.

8. Agencement selon l'une quelconque des revendications précédentes, dans lequel le dispositif (VO1, VO2, VO2`, VO3, VO3`, VO4) est appliqué sur la face arrière de la carte de circuit imprimé (LP1 à LP3) grâce à la liaison par complémentarité de matière sur la carte de circuit imprimé (LP1 à LP3).

9. Agencement selon l'une quelconque des revendications précédentes, dans lequel le dispositif (VO1, VO2, VO2`, VO3, VO3`, VO4) présente deux régions d'extrémité (EB1, EB2) destinées à des pastilles d'empreinte (FP1, FP2).
